Europäisches Patentamt

European Patent Office

Office européen des brevets

(11) Publication number: **0 137 104**
**B1**

(12) **EUROPEAN PATENT SPECIFICATION**

(45) Date of publication of patent specification: **17.08.88**

(21) Application number: **84106463.7**

(22) Date of filing: **06.06.84**

(51) Int. Cl.⁴: **C 08 J 3/12,** C 08 L 53/00 //
(C08L53/00, 21:00)

(54) Improved process for preparing free flowing polymer pellets.

(30) Priority: **29.08.83 US 527055**

(43) Date of publication of application:
**17.04.85 Bulletin 85/16**

(45) Publication of the grant of the patent:
**17.08.88 Bulletin 88/33**

(84) Designated Contracting States:
**BE DE FR GB NL**

(56) References cited:
**WO-A-83/03421**
**FR-A-2 212 342**
**GB-A- 861 854**
**GB-A-1 305 380**
**US-A-4 357 444**

(73) Proprietor: **THE FIRESTONE TIRE & RUBBER
COMPANY
1200 Firestone Parkway
Akron, Ohio 44317 (US)**

(72) Inventor: **Hergenrother, William L.
195 Dorchester Road
Akron Ohio 44313 (US)**

(74) Representative: **Kraus, Walter, Dr. et al
Patentanwälte Kraus, Weisert & Partner
Thomas-Wimmer-Ring 15
D-8000 München 22 (DE)**

Courier Press, Leamington Spa, England.

## Description

### Technical field

The present invention is directed toward a process for the preparation of novel free flowing polymers. A number of polymers and copolymers are known that are tacky or sticky at room temperatures and which may also exhibit creep or cold flow. The latter is a characteristic of a resin or substance which deforms under its own weight, coalescing into an amorphous mass. Creep is defined by C. Harper, *Handbook of Plastics and Elastomers,* Glossary of Terms p. 4 (1975) as follows: "The dimensional change with time of a material under load, following the initial instantaneous elastic deformation; the time-dependent part of strain resulting from force. Creep at room temperature is sometimes called 'cold flow.'"

Several polymers that are of this type include certain high vinyl polybutadienes and block copolymers of conjugated dienes and nylon. While these compounds have useful physical properties as thermosetting resins, they cannot be readily molded with compression or injection apparatus. Such apparatus is normally fed with pellets of the material which are deposited in a feed hopper. Pellets of these materials have a high tendency to stick to one another as well as surrounding surfaces thereby greatly inhibiting their transfer into the apparatus. Also, because they exhibit cold flow, the pellets tend to agglomerate and coalesce upon storage.

### Background art

Previous attempts to eliminate tack and cold flow from polymers have included the use of various filler materials such as silica, carbon black, mica, and a variety of fibers. While such treatment can provide sufficient integrity to cold flow materials for them to hold a shape, it does little to eliminate surface tack. Moreover, high filler loadings can extend to several times the weight of the polymer thereby restricting the usage of the polymer to applications where the filler can be tolerated.

In order to provide tack-free surfaces, surface treatment of polymers is also possible. U.S. Pat. No. 4,029,862 is directed toward a process of chlorinating solid linear polyethylene in order to impart improved handling characteristics such as non-agglomeration. The process is not directly applicable to sticky, cold-flowable polymers, however, inasmuch as the polymer particles treated according to the patent had a free-flowing nature, suitable for extrusion operations, prior to the treatment.

US—A—4,431,765 (U.S. Ser. No. 217,624), owned by the Assignee of record and recently allowed discloses a process for forming free flowing particles of polybutadiene thermoset resins by adding certain filler materials in an amount sufficient to render the resin free flowing and resistant to cold flow. The process calls for the two components to be mixed together to form a blend which is thereafter chopped into small particles.

EP—A—0104247 (≡WO 83/03421 U.S. Ser. No. 362,702), also owned by the Assignee of record discloses a process for preparing free flowing pellets from tacky, cold-flowing polymers. The steps include the addition of a non-cold flowing rubber to a tacky, cold flowing polymer to form a blend, pelletizing the blend and subjecting the pellets to a surface treatment which provides a coating that removes tack. The surface treatment is practiced by subjecting the pellets to oxidation, halogenation or hydroxylation in an aqueous solution.

With the exception of the last application, the remaining art disclosed herein has not provided a process for eliminating both undesirable surface tack and cold flow from polymers and copolymers that exhibit these properties. The present invention differs from the aforesaid application in that the step of blending can now be avoided.

### Disclosure of invention

In general the subject invention is directed toward a process for the preparation of free flowing pellets from tacky, cold flowing polymers which includes the steps of preparing in suspension a tacky, cold flowing polymer in the presence of a solution of non-cold flowing rubber to form a product, removing the suspension solvent, forming pellets of the product and then subjecting the pellets to a surface treatment to remove tack. Following surface treatment, the pellets are separated to yield a free flowing material.

One particularly interesting cold flowing resin is a block copolymer of 1,2-polybutadiene and nylon-6, described in detail hereinbelow. These copolymers are known and have useful physical properties but they are soft and putty-like at room temperatures making them unfit for use in the feed hoppers of injection molding apparatus. In addition to imparting free-flow to pellets of such block copolymers, the process of the present invention also permits higher solids content of the block copolymer to be obtained without loss of suspension during preparation of the copolymer which loss deleteriously affects conversion.

The product exhibits free flow in small particles and comprises from 55 to 95 parts of a tacky, cold flowing polymer and from 5 to 45 parts of a non-cold flowing rubber wherein tack contributed by the cold flowing polymer is removed at the surface of the particles. Removal of the tack and the step of surface treatment in the foregoing method can be provided by immersing the pellets in an aqueous solution containing at least one member selected from the group consisting of $Br_2$, $Cl_2$, NaOCl, KOCl, $Ca(OCl)_2$, $KMnO_4$, $K_2Cr_2O_7$, $H_2O_2$ and $OsO_4$. Hydrochloric acid can also be added to the aqueous solution where one of the foregoing components other than $Br_2$, $Cl_2$, $H_2O_2$ and $OsO_4$ is present. This treatment provides a halogen, oxygen or hydroxyl group on the surface of said pellets. Alternatively, the surface treatment can be practiced by coating the surface of the pellets with a powdered filler material such as talc, silica, mica or polyethylene.

Preferred mode for carrying out the invention

Throughout this specification terms such as "tack", "free flowing", "cold flowing" and "non-cold flowing" are used in the following context. "Tack" is defined as that property which causes two materials to resist separation after their surfaces have been brought into contact for a short time under light pressure. "Free flowing" is defined as the ability of materials, stored in intimate contact, to resist coalescing and, therefore, remain pourable and separate from each other. "Cold flowing" is synonomous with creep and is defined as that property where polymers or copolymers, under normal ambient conditions, are amorphous and flow readily due to gravitational forces. "Non-cold flowing" is defined as the property of a polymer or copolymer to retain its shape under ambient conditions.

Typical examples of a cold flowing, tacky polymer include the block copolymers of butadiene and caprolactam. Such polymers have many properties characteristic of the nylons, however, unlike the nylons, the polymers can be molded at temperatures below the melt temperature of the corresponding nylon and they can be milled at ambient temperatures. They possess upon cure cood impact, good abrasion resistance, toughness and low coefficients of friction. Either 1,2-butadiene or 1,4-butadiene can be employed in the block copolymer to given copolymers moldable as plastics or rubbers, depending on the degree of cure. A particularly useful polymer is the block copolymer of 1,2-butadiene and nylon-6, designated by Firestone as Maran. It has a number average molecular weight of about 15,000 g/mole and a nylon content of 67 percent by weight.

The preparation of these polymers is described in U.S. Pat. Nos. 3,838,108 and 3,859,382, commonly owned by the Assignee of record. Other polymers set forth in the subject patents include block copolymers AB, wherein the A component is selected from the group consisting of conjugated dienes, conjugated diene copolymers with a vinyl substituted aromatic monomer such as styrene, aliphatic, aromatic and cycloaliphatic oxides and sulfides and, wherein the B component is selected from the group consisting of caprolactam, imides, urea, urethanes and phenol formaldehyde.

The foregoing monomers and block copolymers formed therefrom are thoroughly set forth in the aformentioned U.S. Pat. Nos. 3,838,108 and 3,859,382. Inasmuch as the polymers are known as is the process for their preparation, the novelty of the present invention is not directed thereto. Reference to the subject patents can be made by those skilled in the art for the useful block copolymers, hereinafter polymers, that cold flow and are tacky. As such, it has been difficult to employ such polymers in conventional processing equipment where the desired resin is placed in a hopper, in pellet or granular form, to be fed into the apparatus.

The foregoing constitute an exemplification of polymers having plastic or rubber properties but which are cold flowing and tacky. The subject invention is not intended to be limited to the polymers recited inasmuch as it is believed that the subject invention is applicable to any polymer having cold flow and which is tacky. Polymers included in this group may also be peroxide curable, that is, have carbon-carbon double bonds. Although peroxides are not a part of the present invention, it is believed that the double bonds are chemically reacted with the components of the aqueous solution and therefore peroxide curable can be another characteristic to describe the polymers that can be made into free flowing particles according to the process of the present invention. For ease of discussion, these polymers shall generally be referred to in the specification as cold flowing polymers. The preferred polymer treated according to the process of the present invention is the aforementioned Maran resin, a block copolymer of 1,2-butadiene and nylon-6 which has been exemplified hereinbelow.

The first step of the process of the present invention involves the preparation of the cold flowing polymer. A detailed description has been set forth in the aforementioned patents of the Assignee of record and shall only be briefly summarized herein, it being understood that the present invention shall not be limited to the summary. For the preparation of a block copolymer of 1,2-butadiene and nylon-6, hereinafter Maran, 1,3-butadiene is charged to a suitable reaction vessel in a solvent, e.g., aliphatic hydrocarbon, cycloaliphatic hydrocarbon, aromatic compound or the like, with tetrahydrofuran, dimethyl ether, toluene, hexane, and benzene being preferred. Active hydrogens must be excluded so as not to terminate the polymer chain. Polymerization is anionic with an organolithium compound RLi such as n-butyl lithium where R is an aliphatic, although cycloaliphatic and aromatic radicals can be substituted.

The amount of initiator selected depends upon the monomer being employed and the desired molecular weight of the polymer, e.g., 3,000 to 100,000. In order to favor a high 1,2 structure, a modifier such as N,N,N',N',-tetramethylene diamine (TMEDA) is added before polymerization is commenced. Following polymerization of the monomer, butadiene, to form a polybutyldienyl lithium solution, the polymer chain is end capped with a polyisocyanate compound such as toluene diisocyanate (TDI) or a polyisothiocyanate which is added to produce an isocyanate or isothiocyanate end capped polymer having at least one unreacted isocyanate or isothiocyanate group. The second monomer is added at this time such as a lactam of an internal amide, caprolactam for the formation of Maran. Of course, other monomers could be substituted to form urea, urethane, and imide blocks. For the production of Maran, a small amount of phenyl beta naphthylamine (PBNA), an antioxidant can also be added in a compatible solvent such as toluene.

3

Allowing the polymerization of the second monomer to proceed will provide a suspension of the block copolymer in the solvent. The polymer product can thereafter be separated in a conventional manner and it will be found to be a tacky, cold flowing material at room temperature. Such polymers were taken, according to the procedure set forth in the aforementioned EP—A—0104247 (US application, Ser. No. 362,702), and mixed with a quantity of a non-cold flowing rubber to produce a blend free from cold flow.

The present invention departs from this process by elimination of the blending step. Returning to the point of isocyanate and second monomer addition in the reaction vessel, the process of this invention proceeds as follows. Simultaneously with the addition of TDI and caprolactam, a solution of a dry, *e.g.*, less than 50 parts per million of water, non-cold flowing rubber is added which is then present during polymerization of the caprolactam. The non-cold flowing polymer component is incorporated in levels up to 45 parts per hundred rubber by weight (phr) with 5 phr being a minimum amount to impart the desired free flow properties. The preferred polymers include rubbers such as ethylene-propylene-diene terpolymer; Nordel®, a registered trademark of E. I. duPont de Nemours and Co. for ethylene-propylene-hexadiene terpolymer; natural rubber; styrene-butadiene rubber; butyl rubber; branched high molecular weight, high vinyl butadiene rubber; Norsorex, a poly norbornene available from American Cyanamid; polypentamer; the thermoplastic elastomers of styrene and conjugated dienes such as Kraton®, a styrene-butadiene-styrene block copolymer. Kraton® is a registered trademark of Shell Chemical Co. For ease of discussion, these polymers are referred to as non-cold flowing polymers herein.

One particularly useful polymer in this group is the branched, high molecular weight, high vinyl 1,2-polybutadiene. In the uncured state, it is a rubber, as is the linear, 1,2-polybutadiene material discussed hereinabove, but differs primarily by the fact that it is non-cold flowing, while the former is a cold flowing material. It can be prepared by the anionic polymerization of 1,3-butadiene in the presence of an organolithium initiator modified with bis-heterocyclic ethane compounds such as bis-morpholino ethane (DME), bis-piperidino ethane (DPE), bis-pyrrolidino ethane (DPEE), and bis-N-methyl piperazino ethane (DNMPE). The polymer obtained by this process contains as much as 100 percent vinyl polybutadiene and randomly distributed syndio and isotactic units. In general, a bis-piperidino ethane modified n-butyllithium initiator can be readily employed. Termination with dry caprolactam is preferable to provide a stable, storable solution that will be compatible with the anionic nylon polymerization involved in the last step of the Maran resin preparation.

The non-cold flowing rubber desired is also dissolved in one of the aforementioned solvents. After polymerization of the second monomer is complete, 0.1 to 16 hours, with 3 hours being preferred, the solvent is removed such as by evaporation and the product is vacuum dried. The product is then milled into a sheet and, if desired, fillers, resins, vulcanizing agents and other additives incorporated at this point. Suitable fillers include silica, mica, $CaCo_3$, $CaSiO_3$, glass fibers, graphite fibers and the like which can be added in amounts of from about five to about 350 phr. Vulcanizing agents such as dicumyl peroxide (Dicup), Vulcup and others disclosed in U.S. Pat. No. 3,835,075 can be employed in amounts of from about 0.5 to about 10 phr. Additional ingredients that can be added include compounds such as colorants, lubricants, mold release agents and coupling agents.

The product, with or without additives, is then cut into small particles such as pellets. The pellet size has not been found to be critical and the diameter is therefore discretionary. Common pellet sizes that can be employed have ranged from about 0.635 cm to 1.27 cm in diameter although larger or smaller diameters are equally applicable. As is known to those skilled in the art, pelletization, per se, is not novel. The step is required herein inasmuch as a pellet form of particle is ultimately desired.

The resulting pellets must be further treated shortly after their formation to avoid agglomeration. Although preparing with the cold flowing polymer in the presence of the non-cold flowing polymer eliminates cold flow, the problem of surface tack, stickiness, is not eliminated. The process of the present invention therefore also includes a step to remedy the sticky surface of the pellets so they will not agglomerate or fuse together.

In this next step, the particles or pellets are subjected to a surface treatment, namely addition to an aqueous solution which can react chemically therewith. Typical chemical reactions include oxidation, halogenation, hydroxylation. Suitable treating agents would include aqueous solutions of $Br_2$, $Cl_2$, NaOCl, KOCl, $Ca(OCl)_2$, $KMnO_4$, $K_2Cr_2O_7$, $H_2O_2$, $OsO_4$, and the like. While several of these can be employed alone, hydrochloric acid can be added to the sodium, potassium and calcium salts to speed the treatment. Where the cold flowing polymer comprises polybutadiene homopolymer or copolymer it is believed that the chemical treatment adds to the surface unsaturation imparted by the polybutadiene portion of the blend.

The step can be practiced by immersing previously formed pellets in one of the aqueous solutions set forth hereinabove and stirring for about 0.5 to about 30 minutes, depending upon the concentration employed, at a temperature of 25°C. The treated pellets are then filtered from the aqueous solution and washed with water to remove any residue solution. After sufficient washing, the pellets are then air dried. The resulting pellets are then also tack free.

An alternative surface treatment would include dusting or coating the pellets with a layer of a powdery filler material such as talc, mica, silica, or polyethylene. Where the presence of a filler material in the final product would not be undesirable from consideration of physical properties or appearance, the dusting step can be employed. If, on the other hand, no filler should be present, the first treatment with an aqueous solution as disclosed hereinabove should be employed.

4

The pellets prepared by this process can be stored without coalescing for extended periods of time. Testing showed that pellets comprising about 83 phr Maran and 17 phr of non-cold flowing high molecular weight high vinyl polybutadiene exhibited no tack or cold flow. Furthermore, the free flowing pellets were molded and found to possess the same physical properties as an untreated Maran resin of the same nylon content.

In the experimental work set forth hereinbelow, exemplifying the method of the present invention, several Maran resins were prepared in the presence of two non-cold flowing high vinyl, high molecular weight 1,2-polybutadiene and then surface treated. Tests were conducted and have been reported providing free-flowing properties for all the resins and flexural and impact properties and heat distortion temperatures for two of the resins.

For Examples 1 and 2 which follow, a branched 1,2-polybutadiene non-cold flowing rubber (branched 1,2-PBd) was dissolved in 400 cc of dry toluene. Toluene was selected to keep the pressure down. Hexane would give higher pressures but similar reaction times in a suitable reaction vessel. The branched 1,2-PBd was characterized by a Mooney viscosity at 100°C of 54.6; 3.7% cis-structure; 1.6% trans-structure; 94.7% 1,2-structure; 419,000 g/mole MW and $\bar{M}w/\bar{M}n=1.114$. 20 and 10 gram portions were employed for Examples 1 and 2, respectively.

Example 1

Into a 540 ml beverage bottle with magnetic stirrer was charged a 24% solution of 1,2-butadiene (20.0 g Bd) in hexane (83.3 g). 211 g of dry hexane was also charged plus 1.20 cc of 6.6 molar TMEDA. The solution was cooled to −23°C, 2.55 cc of 1.53 molar n-butyl lithium initiator was charged and polymerization was allowed to proceed for 3 hours. At the end of this time, 0.57 cc of 7.03 molar TDI was added to the reaction vessel, followed by 80 g of dry caprolactam, 20 g of branched 1,2-PBd in toluene and 4.0 cc of 10% PBNA in toluene. Polymerization was allowed to proceed for 3 hours at 160°C.

Example 2

Into a 540 ml beverage bottle with magnetic stirrer was charged a 24% solution of 1,2-butadiene (20.0 g Bd) in hexane (83.3 g). 249 g of dry hexane was also charged plus 1.20 cc of 6.6 molar TMEDA. The solution was cooled to −23°C, 2.55 cc of 1.53 molar n-butyl lithium initiator was charged and polymerization was allowed to proceed for 3 hours. At the end of this time, 0.57 cc of 7.03 molar TDI was added to the reaction vessel, followed by 80 g of dry caprolactam, 10 g of branched 1,2-PBd in toluene and 3.0 cc of 10% PBNA in toluene. Polymerization was allowed to proceed for 3 hours at 160°C.

Following polymerization, Examples 1 and 2 were cooled and the toluene was evaporated under a hood. After vacuum drying the product was milled into a sheet and cut into pellets. The pellets were then treated with a sodium hypochlorite/dilute HCl mixture for 20 minutes at 25°C. After air drying, free flowing, tack free pellets resulted.

The nylon content of Example 1 was 66.7% while that of Example 2 was 72.7%. Both contained 16.7% branched 1,2-PBd, the remaining amount being the 1,2-polybutadiene content of the Maran block copolymers.

For Examples 3 and 4 which follow, another branched, 1,2-polybutadiene non-cold flowing rubber (branched 1,2-PBd) was employed, dissolved in dry toluene. It was prepared as follows:

Preparation of high molecular weight 1,2-polybutadiene

Into a clean, dry, stirred reactor was added 4545 g of a 24.5% blend of butadiene in hexane. After cooling to about 4°C, 2.8 cc of 4.66 molar of dipiperidinoethane and 4.0 cc of a 1.53 molar solution of n-butyl lithium in hexane was charged. The reaction was stirred for 16 hours and then 8.0 cc of a 1 molar solution of dry caprolactam in toluene was added. The resulting product was 23.4% solids and had a 1,2 content of 98% and an intrinsic viscosity of 1.42 dl/g as measured at 25°C in toluene. Storage under a slight nitrogen pressure permitted use of the rubber directly without further treatment in the subsequent reactions.

Example 3

Into a clean, dry, stirred reactor was added 1143.1 g of a 24.5% blend of butadiene in hexane. After cooling to −20° to −30°C, 17.1 cc of 6.6 molar TMEDA and 38.7 cc of a 1.53 molar solution of n-butyl lithium in hexane were added. The temperature was held at −25°C for 3 hours and then was allowed to raise as 8.0 cc of 7.03 molar TDI was rapidly added. The temperature was then increased to 70° to 80°C while 846.3 g of dry caprolactam was added followed by 598.7 g of the rubber solution described hereinabove. Heating for 3 hours at 155° to 160°C completed the polymerization. After cooling, the suspension was drum dried to give 1252 g of a non-cold flowing sticky polymer with an intrinsic viscosity of 3.34 dl/g as measured at 25°C in a solution of 50/50 phenol/tetrachloroethane.

The Maran resin prepared in this example had a composition of 75% nylon and 25% of 5,000 MW 1,2-PBd-NCO. When formed in the presence of the rubber described hereinabove, it had an average composition of 67% nylon-6 with 22% 1,2-PBd and 11% branched 1,2-PBd.

Example 4

Into a clean, dry, stirred reactor was added 861.8 g of a 24.5% blend of butadiene in hexane. After

5

cooling to −20° to −30°C 12.8 cc of 6.6 molar TMEDA and 29.0 cc of a 1.53 molar solution of n-butyl lithium in hexane were added. The temperature was held at −15°C for 3 hours and then was allowed to raise as 6.0 cc of 7.03 molar TDI was rapidly added. The temperature was then increased to 70° to 80°C while 854.7 g of dry caprolactam was added followed by 907.2 g of the rubber solution described hereinabove. Heating for 3 hours at 155° to 160°C completed the polymerization. After cooling the suspension was drum dried to give 1245 g of a non-cold flowing sticky polymer with an intrinsic viscosity of 2.27 dl/g as measured at 25°C in a solution of 50/50 phenol/tetrachloroethane.

The Maran prepared in this example has a composition of 75% nylon and 20% of 5,000 MW 1,2-PBd-NCO. When formed in the presence of the rubber described hereinabove, it had an average composition of 67% nylon-6 with 16.5% 1,2-PBd and 16.5% branched 1,2-PBd.

The composition obtained from Examples 3 and 4 could be milled at 40° to 80°C to incorporate 2 parts per hundred resin of Vulcup-R as a curative. After cutting into pellets, aqueous hypochlorous acid treatment at 25°C for 20 minutes gave tack free pellets that could be stored for over six months and still remain free flowing.

Curing at 175°C for 20 minutes in a compression mold gave the following properties for the unfilled resin (Example 3) as well as Examples 3 and 4 containing 150 parts of 325 mesh Silica with 1.5 parts of vinyl triacetoxysilane added as a binding agent.

TABLE I

| Example | 3 | 3 | 4 |
|---|---|---|---|
| Filler | No | Yes | Yes |
| Flexural Strength MPa | 75.21 | 79.35 | 87.63 |
| Flexural Modulus GPa | 2.35 | 4.00 | 4.42 |
| Notched Izod kJ/m | 0.050 | 0.03 | 0.022 |
| Heat Distortion Temperature °C | 181 | 193 | 214 |
| Rockwell E hardness | 39 | 44 | 57 |

The physical properties of the cured resins were all acceptable and generally not less than those which would characterize the same Maran resin composition without treatment according to the process of the present invention.

With respect to the free flow of Examples 1—4, after standing in the test tubes under their own weight for six months, all of the above examples would flow when the tubes were inverted, thus indicating that the process of the present invention is operable.

In the process of preparing Maran resins according to the aforementioned patents of the Assignee of record, the nylon content of the block copolymer, Maran, can range from about 25 to 80 percent by weight depending upon the amount of caprolactam charged. However, at the higher nylon contents, *e.g.*, over 70 percent, often a loss of suspension results with a corresponding decrease in conversion to as low as 40 percent. By adding the solution of non-cold flowing rubber according to the process set forth herein, a higher viscosity reaction mixture is produced which allows the incorporation of higher nylon contents without loss of suspension.

Based upon the results reported herein, it should be apparent that the process of the present invention can be employed to provide novel free flowing polymers. The polymers prepared essentially retain their useful physical properties while undesirable cold flow and tack are virtually eliminated. It is to be understood that the various examples reported herein have been provided to present results obtainable by practice of the disclosed invention. Inasmuch as various polymers, as well as substances for the surface treatment step, that can be employed to practice the process of the present invention have been disclosed, the invention is not to be limited by the examples provided herein. It will be understood, therefore, that other polymers and surface treatment agents or methods of treatment can be substituted for those that have been exemplified. Regarding the selection of fillers, curatives and other additives, the present invention should not be restricted to less than the total group of such compounds which are known for the preparation of thermoplastic resins inasmuch as they are only optionally employed and do not constitute the point of novelty.

**Claims**

1. A process for the preparation of free flowing pellets from tacky, cold flowing polymers comprising the steps of:
    preparing in suspension a tacky, cold flowing polymer in the presence of a solution of a dry non-cold flowing rubber to form a product;

removing the suspension solvent;

forming pellets of said product;

subjecting said pellets to a surface treatment whereby a coating is provided to remove tack; and thereafter separating said pellets to yield a free flowing material.

2. A process, as set forth in claim 1, wherein said tacky, cold flowing polymer is selected from the group consisting of linear, high vinyl 1,2-polybutadiene, and block copolymers AB, wherein the A component is selected from the group consisting of conjugated dienes, conjugated diene copolymers with a vinyl substituted aromatic monomer, aliphatic, aromatic and cycloaliphatic oxides and sulfides and, wherein the B component is selected from the group consisting of caprolactam, imides, urea, urethanes and phenol formaldehyde.

3. A process, as set forth in claim 2, wherein said non-cold flowing rubber is selected from the group consisting of ethylene-propylene-hexadiene terpolymers, natural rubber, styrene-butadiene rubber, butyl rubber, branched high molecular weight high vinyl butadiene rubber, polynorbornene, polypentamer and thermoplastic elastomers of styrene and conjugated dienes.

4. A process, as set forth in claim 3, wherein said tacky polymer comprises poly(butadiene-block-nylon-6) and said non-cold flowing rubber is a branched high vinyl, high molecular weight 1,2-polybutadiene.

5. A process, as set forth in claim 4, wherein said step of preparing a suspension comprises the steps of:

anionically polymerizing 1,2-butadiene to form an active polybutadiene segment;

end capping said polybutadiene segment with a polyisocyanate compound;

charging caprolactam monomer for the formation of a nylon block segment from said polybutadiene segment while simultaneously charging a solution of said branched high molecular weight high vinyl 1,2-polybutadiene.

6. A process, as set forth in claim 5, wherein said active polybutadiene segment comprises polybutadienyl lithium; and

said polyisocyanate compound is selected from the group consisting of di- and triisocyanates and di- and triisothiocyanates.

7. A process, as set forth in claim 6, wherein said diisocyanate is toluene diisocyanate.

8. A process, as set forth in claim 1, wherein said step of subjecting said pellets includes immersing said pellets in an aqueous solution containing at least one member of the group consisting of $Br_2$, $Cl_2$, NaOCl, KOCl, $Ca(OCl)_2$, $KMnO_4$, $K_2Cr_2O_7$, $H_2O_2$ and $OsO_4$.

9. A process, as set forth in claim 8, wherein said aqueous solution contains HCl and at least one member of the group consisting of NaOCl, KOCl, $Ca(OCl)_2$, $KMnO_4$, and $K_2Cr_2O_7$.

10. A process, as set forth in claim 1, wherein said step of subjecting said pellets comprises oxidation with an aqueous solution.

11. A process, as set forth in claim 1, wherein said step of subjecting said pellets comprises halogenation with an aqueous solution.

12. A process, as set forth in claim 1, wherein said step of subjecting said pellets comprises hydroxylation with an aqueous solution.

13. A process, as set forth in claim 1, wherein said step of subjecting said pellets includes coating said pellets with a finely powdered filler material.

14. A process, as set forth in claim 1, including the additional step of:

adding suitable fillers to said product in an amount of from about five to about 350 parts per 100 parts of polymer in said product prior to said step of forming pellets.

15. A process, as set forth in claim 1, including the additional step of:

adding a suitable curative to said product prior to said step of forming pellets.

16. A process, as set forth in claim 1, wherein said product comprises:

from 55 to 95 parts of said tacky polymer; and

from 5 to 45 parts of said non-cold flowing rubber.

## Patentansprüche

1. Verfahren zur Herstellung von freifließenden Pellets von klebrigen kaltfließenden Polymeren, umfassend die Stufen:

Herstellung eines klebrigen kaltfließenden Polymeren in Suspension in Gegenwart einer Lösung eines trocknenen nichtkaltfließenden Kautschuks, um ein Produkt zu bilden;

Entfernung des Suspensionslösungsmittels;

Bildung von Pellets des genannten Produkts;

Unterwerfung der genannten Pellets einer Oberflächenbehandlung, wodurch ein Überzug zur Entfernung der Klebrigkeit erhalten wird; und

danach erfolgende Abtrennung der genannten Pellets, um ein freifließendes Material zu gewinnen.

2. Verfahren nach Anspruch 1, dadurch gekennzeichnet, daß das genannte klebrige kaltfließende Polymere aus der Gruppe bestehend aus linearem 1,2-Polybutadien mit hohem Vinylanteil und Blockcopolymeren AB ausgewählt ist, wobei die Komponente A aus der Gruppe bestehend aus konjugierten Dienen, konjugierten Dien-Copolymeren mit einem vinylsubstituierten aromatischen Monomeren, aliphatischen, aromatischen und cycloaliphatischen Oxiden und Sulfiden ausgewählt ist und wobei die Komponente B aus der Gruppe bestehend aus Caprolactam, Imiden, Harnstoff, Urethanen und Phenolformaldehyd ausgewählt ist.

3. Verfahren nach Anspruch 2, dadurch gekennzeichnet, daß der genannte nichtkaltfließende Kautschuk aus der Gruppe bestehend aus Ethylen-Propylen-Hexadien-Terpolymeren, Naturkautschuk, Styrol-Butadien-Kautschuk, Butylkautschuk, verzweigtem Butadienkautschuk mit hohem Molekulargewicht und hohem Vinylgehalt, Polynorbornen, Polypentamer und thermoplastischen Elastomeren von Styrol und konjugierten Dienen ausgewählt ist.

4. Verfahren nach Anspruch 3, dadurch gekennzeichnet, daß das genannte klebrige Polymere Poly(butadien-Block-Nylon-6) umfaßt und daß der genannte nichtkaltfließende Kautschuk verzweigtes 1,2-Polybutadien mit hohem Vinylgehalt und hohem Molekulargewicht ist.

5. Verfahren nach Anspruch 4, dadurch gekennzeichnet, daß die genannte Stufe der Herstellung einer Suspension die Stufen:

anionisches Polymerisieren von 1,2-Butadien unter Bildung eines aktiven Polybutadiensegments;

Endverkappen des genannten Polybutadiensegments mit einer Polyisocyanatverbindung;

Einbringung von Caprolactam-Monomeren zur Bildung eines Nylon-Blocksegments aus dem genannten Polybutadiensegment unter gleichzeitiger Einbringung einer Lösung des genannten verzweigten 1,2-Polybutadiens mit hohem Molekulargewicht und hohem Vinylgehalt, umfaßt.

6. Verfahren nach Anspruch 5, dadurch gekennzeichnet, daß das genannte Polybutadiensegment Polybutadienyllithium umfaßt und daß die genannte Polyisocyanatverbindung aus der Gruppe bestehend aus Di- und Triisocyanaten und Di- und Triisothiocyanaten ausgewählt ist.

7. Verfahren nach Anspruch 6, dadurch gekennzeichnet, daß das genannte Diisocyanat Toluoldiisocyanat ist.

8. Verfahren nach Anspruch 1, dadurch gekennzeichnet, daß die genannte Stufe der Unterwerfung der genannten Pellets die Eintauchung der genannten Pellets in eine wäßrige Lösung einschließt, die mindestens eine Substanz der Gruppe bestehend aus $Br_2$, $Cl_2$, NaOCl, KOCl, $Ca(OCl)_2$, $KMnO_4$, $K_2Cr_2O_7$, $H_2O_2$ und $OsO_4$ enthält.

9. Verfahren nach Anspruch 8, dadurch gekennzeichnet, daß die genannte wäßrige Lösung HCl und mindestens eine Substanz der Gruppe bestehend aus NaOCl, KOCl, $Ca(OCl)_2$, $KMnO_4$ und $K_2Cr_2O_7$ enthält.

10. Verfahren nach Anspruch 1, dadurch gekennzeichnet, daß die genannte Stufe der Unterwerfung der genannten Pellets die Oxidation mit einer wäßrigen Lösung umfaßt.

11. Verfahren nach Anspruch 1, dadurch gekennzeichnet, daß die genannte Stufe der Unterwerfung der genannten Pellets die Halogenierung mit einer wäßrigen Lösung umfaßt.

12. Verfahren nach Anspruch 1, dadurch gekennzeichnet, daß die genannte Stufe der Unterwerfung der genannten Pellets die Hydroxylierung mit einer wäßrigen Lösung umfaßt.

13. Verfahren nach Anspruch 1, dadurch gekennzeichnet, daß die genannte Stufe der Unterwerfung der genannten Pellets die Beschichtung der genannten Pellets mit einem feingepulverten Füllstoffmaterial umfaßt.

14. Verfahren nach Anspruch 1, gekennzeichnet durch die zusätzliche Stufe der Zugabe von geeigneten Füllstoffen zu dem genannten Produkt in einer Menge von etwa 5 bis etwa 350 Teilen pro 100 Teile Polymerem in dem genannten Produkt vor der genannten Stufe der Bildung von Pellets.

15. Verfahren nach Anspruch 1, gekennzeichnet durch die zusätzliche Stufe der Zugabe eines geeigneten Härtungsmittels zu dem genannten Produkt vor der genannten Stufe der Bildung der Pellets.

16. Verfahren nach Anspruch 1, dadurch gekennzeichnet, daß das genannte Produkt 55 bis 95 Teile des genannten klebrigen Polymeren und 5 bis 45 Teile des genannten nichtkaltfließenden Polymeren umfaßt.

**Revendications**

1. Procédé de préparation de pastilles à écoulement libre à partir de polymères collants, s'écoulant à froid, comprenant les étapes consistant:

à préparer en suspension un polymère collant, s'écoulant à froid, en présence d'une solution d'un caoutchouc sec, ne s'écoulant pas à froid, pour former un produit;

à éliminer le solvant de mise en suspension;

à former des pastilles dudit produit;

à soumettre lesdites pastilles à un traitement de surface, l'adhésivité étant ainsi supprimée par application d'un revêtement; et

à séparer ensuite lesdites pastilles pour obtenir une matière à écoulement libre.

2. Procédé suivant la revendication 1, dans lequel le polymère collant, s'écoulant à froid, est choisi dans le groupe comprenant un 1,2-polybutadiène linéaire à haute teneur en groupes vinyle et des copolymères séquencés de formule AB, dans laquelle le constituant A est choisi dans le groupe comprenant des diènes conjugués, des copolymères de diènes conjugués avec un monomère aromatique à substitution vinyle, des oxydes et sulfures aliphatiques, aromatiques et cycloaliphatiques, et dans laquelle le constituant B est choisi dans le groupe comprenant le caprolactame, des imides, l'ureé, des uréthannes et le phénol-formaldéhyde.

3. Procédé suivant la revendication 2, dans lequel le caoutchouc ne s'écoulant pas à froid est choisi dans le groupe comprenant des terpolymères éthylène-propylène-hexadiène, du caoutchouc naturel, le caoutchouc styrène-butadiène, le caoutchouc butyle, un caoutchouc butadiène ramifié de haut poids moléculaire, à haute teneur en groupes vinyle, le polynorbornène, un polypentamère et des élastomères thermoplastiques de styrène et de diènes conjugués.

4. Procédé suivant la revendication 3, dans lequel le polymère collant consiste en poly(butadiène-Nylon-6 séquencé) et le caoutchouc ne s'écoulant pas à froid est un 1,2-polybutadiène ramifié de haut poids moléculaire, à haute teneur en groupes vinyle.

5. Procédé suivant la revendication 4, dans lequel l'étape de préparation d'une suspension comprend les étapes consistant:

à effectuer une polymérisation anionique de 1,2-butadiène pour former un segment de polybutadiène actif;

à munir d'une protection terminale ledit segment de polybutadiène au moyen d'un polyisocyanate;

à introduire un monomère de caprolactame afin de permettre la formation d'un segment séquencé de Nylon à partir dudit segment de polybutadiène, tout en introduisant simultanément une solution dudit 1,2-polybutadiène ramifié de haut poids moléculaire, à haute teneur en groupes vinyle.

6. Procédé suivant la revendication 5, dans lequel le segment de polybutadiène actif consiste en polybutadiényl-lithium; et

le polyisocyanate est choisi dans le groupe comprenant des di- et triisocyanates et des di- et triisothiocyanates.

7. Procédé suivant la revendication 6, dans lequel le di-isocyanate est le diisocyanato-toluène.

8. Procédé suivant la revendication 1, dans lequel l'étape de traitement des pastilles consiste à immerger ces dernières dans une solution aqueuse contenant au moins un membre du groupe comprenant $Br_2$, $Cl_2$, NaOCl, KOCl, $Ca(OCl)_2$, $KMnO_4$, $K_2Cr_2O_7$ et $OsO_4$.

9. Procédé suivant la revendication 8, dans lequel la solution aqueuse contient HCl et au moins un membre du groupe comprenant NaOCl, KOCl, $Ca(OCl)_2$, $KMnO_4$, et $K_2Cr_2O_7$.

10. Procédé suivant la revendication 1, dans lequel l'étape de traitement des pastilles comprend une oxydation au moyen d'une solution aqueuse.

11. Procédé suivant la revendication 1, dans lequel l'étape de traitement des pastilles comprend une halogénation au moyen d'une solution aqueuse.

12. Procédé suivant la revendication 1, dans lequel l'étape de traitement des pastilles comprend une hydroxylation au moyen d'une solution aqueuse.

13. Procédé suivant la revendication 1, dans lequel l'étape de traitement des pastilles comprend un revêtement de ces dernières au moyen d'une matière finement pulvérisée servant de charge.

14. Procédé suivant la revendication 1, comprenant l'étape supplémentaire consistant:

à ajouter au produit des charges convenables en une quantité d'environ cinq à environ 350 parties pour 100 parties de polymère dans ledit produit, avant l'étape de formation des pastilles.

15. Procédé suivant la revendication 1, comprenant l'étape supplémentaire consistant:

à ajouter au produit un agent de réticulation convenable avant l'étape de formation des pastilles.

16. Procédé suivant la revendication 1, dans lequel le produit comprend:

55 à 95 parties du polymère collant; et

5 à 45 parties du caoutchouc ne s'écoulant pas à froid.